# EUROPÄISCHE PATENTSCHRIFT

(11) **EP 2 029 346 B1**
(45) Veröffentlichungstag und Bekanntmachung des Hinweises auf die Patenterteilung: **15.05.2013**
(21) Anmeldenummer: 07729819.8
(22) Anmeldetag: 01.06.2007
(51) Int. Cl.: B29C 45/72

(54) **POSITIONIERVORRICHTUNG**
POSITIONING DEVICE
DISPOSITIF DE POSITIONNEMENT

(30) Priorität: 20.06.2006 DE 102006028723
(43) Veröffentlichungstag der Anmeldung: 04.03.2009
(73) Patentinhaber: MHT Mold & Hotrunner Technology AG, 65239 Hochheim (DE)
(72) Erfinder: NETER, Witold, Newnan, Georgia 30265 (US); THÖMMES, Helmut, 54441 Kastel (DE); WAGNER, Christian, 55118 Mainz (DE)
(74) Vertreter: Köppen, Manfred
(86) Internationale Anmeldenummer: PCT/EP2007/055428
(87) Internationale Veröffentlichungsnummer: WO 2007/147718

(56) Entgegenhaltungen:
- DE-A1- 19 527 756
- JP-A- 2000 108 170
- US-A- 5 837 299

## Beschreibung

Die vorliegende Erfindung betrifft eine Positioniervorrichtung für Nachbehandlungswerkzeuge zur Nachbehandlung von in einer Spritzgießform hergestellten Vorformlingen sowie ein System mit einer solchen Positioniervorrichtung.

Das Spritzgießen ist eines der wichtigsten Verfahren zur Herstellung von Formlingen bzw. Formteilen. Hierbei wird die Formmasse erhitzt, plastifiziert und unter hohem Druck in ein entsprechendes Formwerkzeug gedrückt. Die Formmasse erstarrt in dem Formwerkzeug und wird anschließend dem geöffneten Werkzeug entnommen.

Handelsübliche PET-Flaschen werden im allgemeinen durch Streckblasformen eines Hohlkörper-Preforms bzw. Hohlkörpervorformlings hergestellt. Dabei wird der Hohlkörpervorformling in einem ersten Schritt mittels Spritzgießen erstellt. Das sich an den Spritzgießvorgang anschließende Streckblasformen kann entweder unmittelbar nach Herstellung des Hohlkörpervorformlings oder zu einem späteren Zeitpunkt erfolgen.

Bei der Herstellung der entsprechenden Spritzgießformen ist ein hoher Aufwand von Nöten, da die Spritzgießform einerseits für sehr hohe Drücke ausgelegt sein muß und andererseits auch entsprechend beheizte und/oder gekühlte Kanäle aufweisen muß.

Üblicherweise besteht ein Spritzgießwerkzeug zur Herstellung von PET-Vorformlingen aus einer Vielzahl, z. B. 96, Kavitäten, in die entsprechend ausgebildete Werkzeugkerne eingeführt werden. Bei geschlossenem Werkzeug, d.h., wenn der Kern in die entsprechende Kavität eingesetzt ist, wird zwischen dem Kern einerseits und der Kavität andererseits ein Raum, der sogenannte Formraum, gebildet. In diesem Raum wird dann der plastifizierte Kunststoff, z. B. PET, unter hohem Druck eingespritzt. Sobald der PET-Vorformling genügend abgekühlt ist, kann die Form geöffnet und der Vorformling entnommen werden.

Um die Zykluszeiten, d.h. die Zeit von einem Spritzvorgang bis zu dem nächsten Spritzvorgang, zu reduzieren, ist es bereits üblich, den Preform zu einem sehr frühen Zeitpunkt aus der Form zu entnehmen, zu dem der Preform an seinen Außenflächen bereits fest ist, dessen innerer Bereich, die sogenannte Seele, jedoch noch flüssig ist. In diesem Zustand wird der Vorformling im allgemeinen in eine sogenannte Aufnahmeplatte übergeben, die aus einer Gruppe von Aufnahmekavitäten besteht. So ist es beispielsweise bei den sogenannten Vertikalwerkzeugen, d.h. denjenigen Spritzgießwerkzeugen, die sich durch eine vertikale Bewegung des einen Werkzeugteils gegenüber dem anderen öffnen, üblich, die Werkzeugform bereits nach z. B. 10 Sekunden zu öffnen, eine Aufnahmeplatte mit entsprechenden Aufnahmekavitäten in die Form einzufahren, die einzelnen Preforms in die Aufnahmekavitäten mittels Schwerkraft hineinfallen zu lassen, die Aufnahmeplatte mit den Preforms aus dem Werkzeug herauszufahren, die Form wieder zu schließen und den nächsten Spritzgießvorgang zu beginnen. Während des nächsten Spritzgießvorgangs verbleiben die vorherigen Preforms in der Aufnahmekavität, die üblicherweise gekühlt wird.

Es sind auch Ausführungsformen bekannt, bei denen die einzelnen Preforms mittels einer Greifereinheit aus der Form entnommen und in die außerhalb der Werkzeugform angeordnete Aufnahmeplatte übergeben werden.

Da der Vorformling zur Abkühlung in der Aufnahmekavität des Standes der Technik eine verhältnismäßig lange Zeit verweilen muß, so daß in der Regel bereits der nächste Vorformling aus dem Spritzgießwerkzeug entnommen werden kann, bevor der Vorformling in der Aufnahmekavität soweit abgekühlt ist, daß er ohne die Gefahr einer Beschädigung entnommen werden kann, ist es bereits üblich, Aufnahmeplatten zu verwenden, die mehrere Gruppen von Aufnahmekavitäten besitzen, wobei jede Gruppe so viele Aufnahmekavitäten aufweist, wie das Spritzgießwerkzeug Vorformlinge pro Spritzzyklus bereitstellt. Die einzelnen Aufnahmekavitätengruppen werden dann nacheinander mit Vorformlingen bestückt, so daß der einzelne Vorformling länger als einen Spritzgießzyklus in der Aufnahmekavität verbleiben kann.

Solche Aufnahmeplatten sind jedoch entsprechend groß und nur sehr aufwendig zu steuern.

Um die Zykluszeit weiter zu verkürzen, wurden in den letzten Jahren etliche Anstrengungen unternommen, den Preform bereits zu einem sehr frühen Zeitpunkt aus der Spritzgussform zu entnehmen. Da der Preform zu solch einem frühen Zeitpunkt noch relativ weich ist, werden höhere Anforderungen an die Nachbehandlung gestellt. So ist vereinzelt bereits vorgeschlagen worden, den in der Aufnahmekavität gehaltenen Vorformling zusätzlich mit einem Nachbehandlungsstift, der in den Vorformling eingebracht wird, zu kühlen bzw. nachzubehandeln. Bei den bekannten Vorrichtungen mit Nachbehandlungsstift, wird dieser jedoch nur kurzzeitig in den Vorformling eingetaucht.

Aus der WO 03/097326 ist bereits eine Vorrichtung zur Nachbehandlung von in einer Spritzgießform hergestellten Vorformlingen bekannt. Diese Maschine weist einen Werkzeugblock mit zwei unterschiedlichen Gruppen von Werkzeugkernen auf. Weiterhin sind vier auf einem Würfel angeordnete Aufnahmeplatten vorgesehen sowie zwei Stiftplatten. Nachdem die Vorformlinge in der Spritzgießmaschine erstellt worden sind, wird diese geöffnet und der Werkzeugblock derart gedreht, daß die andere Gruppe von Werkzeugkernen mit den Werkzeugkavitäten zusammenarbeiten kann. Die mittels Spritzguss hergestellten Vorformlinge befinden sich nun auf den freien Werkzeugkernen. Von dort werden sie nun in eine Aufnahmeplatte mit entsprechenden Aufnahmekavitäten übergeben. Der Aufnahmewürfel mit den einzelnen Aufnahmeplatten wird dann um 90° gedreht und eine Stiftplatte wird kurzzeitig in die Vorformlinge hineingefahren. Danach wird die Stiftplatte wieder herausgefahren und der Aufnahmewürfel um weitere 90° und eine andere Stiftplatte wird wieder in die Vorformlinge hineingefahren. DE-A-195 27 756 offenbart ein system zur Nachbehandelung von in einer spritzgießform hergestellen vor formlingen gemäß dem Oberbegriff des Anspruchs 1.

Durch das Bereitstellen von mehreren Nachbehandlungswerkzeugen bestehend aus Aufnahmekavitäten und/oder Aufnahmefingern ist jedoch im allgemeinen eine aufwendige Robotereinheit zum Positionieren der einzelnen Nachbehandlungswerkzeuge notwendig.

Ausgehend von diesem Stand der Technik ist es daher Aufgabe der vorliegenden Erfindung ein System zur Nachbehandlung von in einer Spritzgießform hergestellten Vorformlingen bereitzustellen, mit dessen Hilfe auf einfache Art und Weise mehrer Nachbehandlungswerkzeuge positioniert werden können.

Diese Aufgabe wird gelöst durch ein System zur Nachbehandlung von in einer Spritzgießform hergestellten Vorformlingen gemäß die Merkmale des Anspruchs 1.

Unter einem Nachbehandlungswerkzeug wird eine Aufnahmekavität, eine Aufnahmefinger oder ein System bestehend aus Aufnahmekavität und Aufnahmefinger verstanden, in die bzw. auf den der Vorformling nach der Entnahme aus dem Spritzgießwerkzeug zum Zwecke der Nachbehandlung, z.B. der Nachkühlung und/oder der Nachformung, transferiert wird. Selbstverständlich kann das Nachbehandlungswerkzeug auch aus einer Gruppe von Aufnahmekavitäten, Aufnahmefingern oder Paaren aus Aufnahmekavität und Aufnahmefinger bestehen.

Beispielsweise ist in einer bevorzugten Ausführungsform vorgesehen, daß jedes Nachbehandlungswerkzeug eine Aufnahmeplatte, die eine Gruppe von Aufnahmekavitäten aufweist, und eine Stiftplatte, die eine Gruppe von Nachbehandlungsstiften aufweist, hat. Weiterhin kann eine Einrichtung zum Überführen der Vorformlinge aus der Spritzgießform abwechselnd in die mindestens zwei Nachbehandlungswerkzeuge vorgesehen sein, wobei die Stiftplatte und die Aufnahmeplatte jedes Nachbehandlungswerkzeuges relativ zueinander zwischen einer offenen Position, in der die Nachbehandlungsstifte außerhalb der Aufnahmekavitäten angeordnet sind, und einer Nachbehandlungsposition, in der die Nachbehandlungsstifte zumindest teilweise in den Aufnahmekavitäten angeordnet sind, hin und her bewegbar sind.

In einer bevorzugten Ausführungsform weist jedes Nachbehandlungswerkzeug eine Öffnungs-und Schließvorrichtung zum Bewegen der Stiftplatte und der Aufnahmeplatte zwischen der offenen Position und der Nachbehandlungsposition aufweist.

Es hat sich als zweckmäßig erwiesen, wenn die Positionierungsrichtung und die Öffnungs- und Schließrichtung kollinear zueinander ausgerichtet sind.

Weiterhin ist in einer bevorzugten Ausführungsform vorgesehen, daß die mindestens zwei Nachbehandlungswerkzeuge in Positionierrichtung nebeneinander angeordnet sind, wobei die Aufnahmeplatte eines Nachbehandlungswerkzeuges mit der Stiftplatte eines anderen Nachbehandlungswerkzeuges verbunden ist.

Wird nun die Öffnungs- und Schließvorrichtung eines Nachbehandlungswerkzeuges betätigt, so führt dies dazu, daß sich die Aufnahmeplatte und alle an dieser montierten weiteren Nachbehandlungswerkzeuge relativ zu der Stiftplatte und allen an dieser montierten weiteren Nachbehandlungswerkzeuge bewegt.

Beispielsweise kann die Positioniervorrichtung aus einem Linearantrieb vorzugsweise aus einem Servomotor bestehen. Die mindestens zwei Nachbehandlungswerkzeuge können auf Schienen verschiebbar angeordnet sein.

In einer bevorzugten Ausführungsform ist die Öffnungs- und Schließvorrichtung eine Hubeinrichtung. Beispielsweise kann hier ein Pneumatikzylinder oder ein elektrischer Antrieb zum Einsatz kommen.

Alternativ dazu kann auch nur eine Öffnungs- und Schließvorrichtung vorgesehen sein. In diesem Fall ist es von Vorteil, wenn die Öffnungsrichtung aller Nachbehandlungswerkzeuge in Positionierungsrichtung ausgerichtet sind, alle Nachbehandlungswerkzeuge in Positionierungsrichtung nebeneinander in einer Reihe angeordnet sind, die Positioniervorrichtung mit dem ersten Nachbehandlungswerkzeug der Reihe verbunden ist und die Öffnungs- und Schließvorrichtung mit dem letzten Nachbehandlungswerkzeug der Reihe verbunden ist. Weiterhin ist es zweckmäßig, wenn alle Nachbehandlungswerkzeug eine Verriegelungseinrichtung aufweisen, die in der verriegelten Position ein Öffnen des Nachbehandlungswerkzeug verhindert. Je nachdem welches Nachbehandlungswerkzeug geöffnet werden soll, kann dann die betreffende Verriegelungsvorrichtung gelöst werden. Wird nun die Öffnungs- und Schließvorrichtung betätigt, so "zieht" diese am einen Ende der Reihe der Nachbehandlungswerkzeuge, während die Positioniervorrichtung das andere Ende der Reihe "festhält". In der Folge wird sich das nicht entriegelte Nachbehandlungswerkzeug öffnen. Es ist daher möglich, mit nur einer Positioniervorrichtung und nur einer Öffnungs- und Schließvorrichtung eine Vielzahl von Nachbehandlungswerkzeuge zu Positionieren und zu Öffnen.

Weiterhin kann ein Führungselement zum Führen des Formlings aus dem Nachbehandlungswerkzeug, welches bei geöffnetem Nachbehandlungswerkzeug zwischen Aufnahmeplatte und Stiftplatte des Nachbehandlungswerkzeuges bewegt werden kann, vorgesehen sein. Das Führungselement stellt sicher, daß die Vorformlinge beim Auswerfen aus dem Nachbehandlungswerkzeug geführt werden.

Dabei kann das Führungselement eine im wesentlichen U-förmige Schiene sein. Gegebenenfalls kann das Abführen der Vorformlinge noch durch Bereitstellen einer Druckluftquelle oder einer Vakuumquelle beschleunigt werden.

In einer besonders bevorzugten Ausführungsform ist das Führungselement an der Einrichtung zum Überführen der Vorformlinge aus der Spritzgießform in die Nachbehandlungswerkzeuge vorgesehen.

Weitere Vorteile, Merkmale und Anwendungsmöglichkeiten der vorliegenden Erfindung werden deutlich anhand der folgenden Beschreibung bevorzugter Ausführungsformen sowie der dazugehörigen Figuren. Es zeigen
Figur 1 bis Figur 4 eine schematische Darstellung der Funktionsweise einer ersten Ausführungsform,
Figur 5 bis Figur 13 eine schematische Darstellung der Funktionsweise einer zweiten Ausführungsform,
Figur 14 bis Figur 16 eine schematische Darstellung der Funktionsweise einer dritten Ausführungsform und
Figur 17 eine schematische Darstellung einer vierten Ausführungsform.

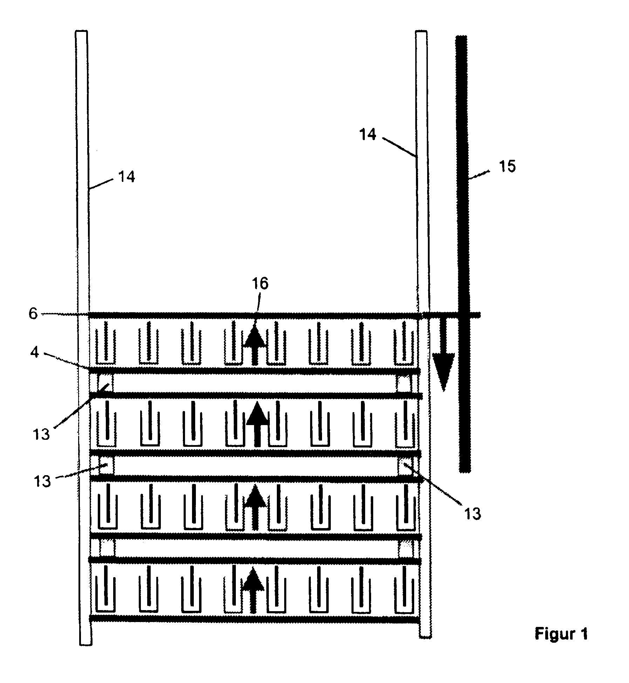

In den Figuren 1 bis 4 sind schematische Ansichten von oben auf eine erste Ausführungsform eines erfindungsgemäßen Systems zur Nachbehandlung von in einer Spritzgießform hergestellten Vorformlingen gezeigt.

Das erfindungsgemäße Nachbehandlungssystem besteht hier aus vier Nachbehandlungswerkzeugen, die jeweils aus einer Aufnahmeplatte 4 und einer Stiftplatte 6 bestehen.

Deutlich wird, daß bei der erfindungsgemäßen Ausführungsform jeder Aufnahmeplatte genau eine Stiftplatte zugeordnet ist, deren Nachbehandlungsstifte während des gesamten Nachbehandlungsprozesses innerhalb der Aufnahmekavitäten der Aufnahmeplatte bleiben.

Alle Nachbehandlungswerkzeuge sind nebeneinander angeordnet, wobei immer eine Aufnahmeplatte 4 über Verbindungseinheiten 13 mit einer Stiftplatte 6 des benachbarten Nachbehandlungswerkzeug verbunden ist.

Ein Nachbehandlungswerkzeug (im dargestellten Beispiel das oberste Nachbehandlungswerkzeug) ist mit einem Linearantrieb 15 verbunden. Mit Hilfe des Linearantriebs kann der gesamte Block aus allen Nachbehandlungswerkzeugen in einer Richtung (im dargestellten Beispiel in horizontaler Richtung) bewegt werden. Der gestrichelt dargestellte Doppelpfeil soll die Bewegungslinie einer Überführungseinrichtung, mit deren Hilfe die Vorformlinge aus der Spritzgießform in die Nachbehandlungswerkzeuge übertragen wird. Da die Vorformlinge nacheinander in die jeweiligen Nachbehandlungswerkzeuge überführt werden sollen, kann mit Hilfe des Linearantriebes 15 der Block aus Nachbehandlungswerkzeugen derart verschoben werden, daß das betreffende Nachbehandlungswerkzeug direkt vor der Bewegungslinie der Übertragungseinrichtung zum Liegen kommt. Alle Nachbehandlungswerkzeuge sind auf Schienen 14 gehalten.

Weiterhin weist jedes Nachbehandlungswerkzeug eine Hubeinrichtung 16 auf, mit deren Hilfe das jeweilige Nachbehandlungswerkzeug von der Nachbehandlungsposition in die geöffnete Position gebracht werden kann.

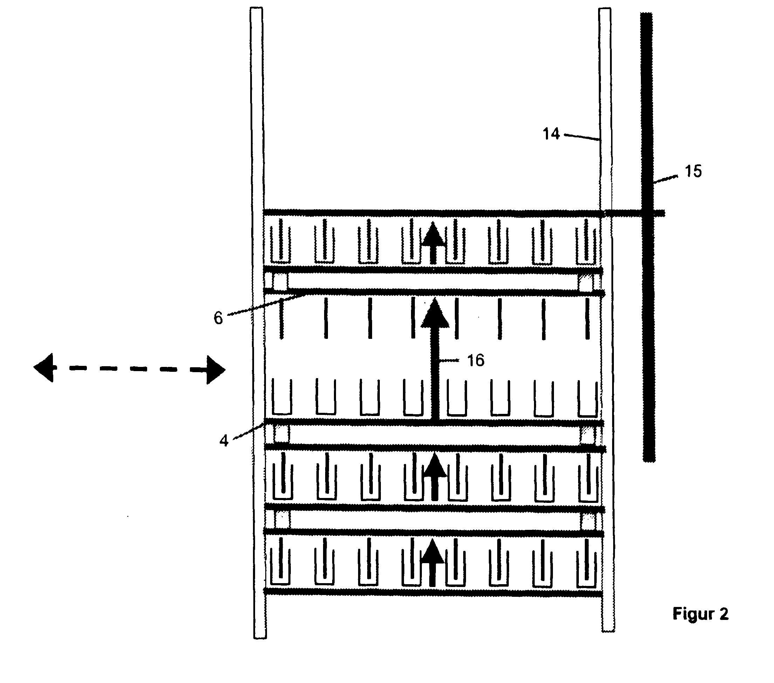

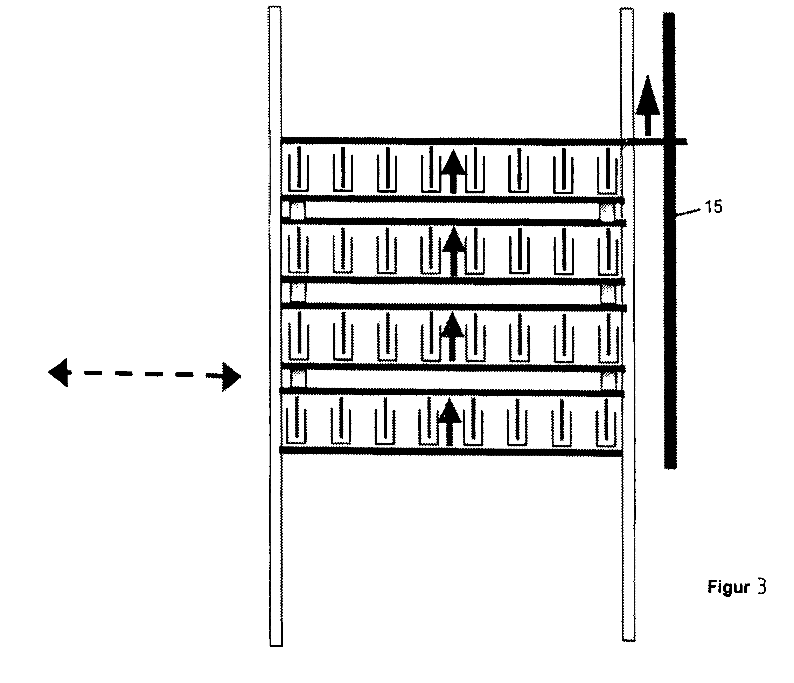

Der Bewegungsablauf wird nun schematisch anhand der Figuren 1 bis 4 beschrieben. In Figur 1 ist der Block aus Nachbehandlungswerkzeugen derart mit Hilfe des Linearantriebes verschoben worden, daß die Bewegungslinie der Überführungseinrichtung vor dem zweiten Nachbehandlungswerkzeug (in der Figur das zweite von oben) zu liegen kommt. Mit Hilfe der Hubeinrichtung 16 kann nun das zweite Nachbehandlungswerkzeug geöffnet werden. Dieser Zustand ist in Figur 2 dargestellt. Nun können eventuell im Nachbehandlungswerkzeug vorhandene Preform entnommen und ein neuer Satz mit Preforms eingesetzt werden. Das Nachbehandlungswerkzeug wird dann wieder geschlossen und der Block aus Nachbehandlungswerkzeugen derart mit Hilfe des Linearantriebes verschoben, daß nun die Bewegungslinie der Überführungseinrichtung vor dem dritten Nachbehandlungswerkzeug (in der Figur das zweite von unten) zu liegen kommt. Diese Situation ist in Figur 3 dargestellt.

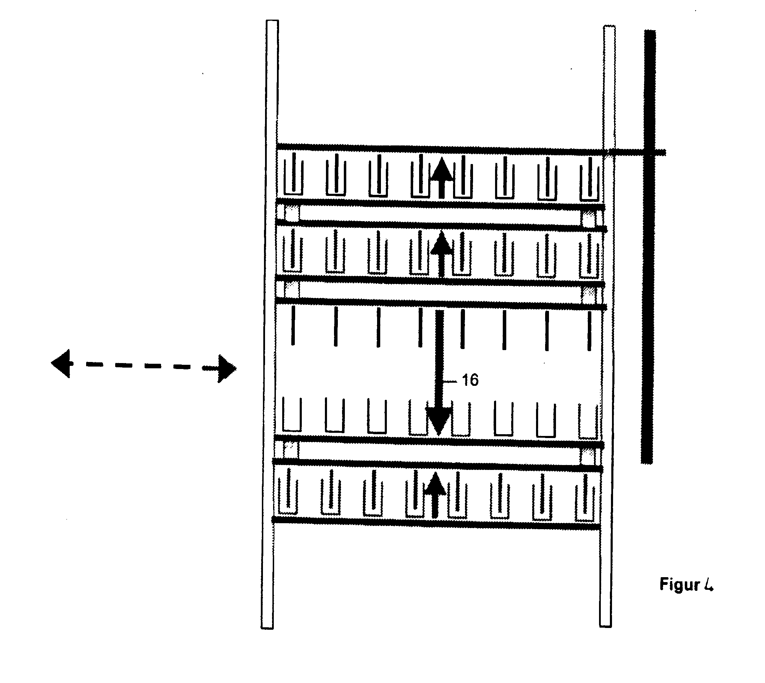

Schließlich ist in Figur 4 die Situation gezeigt, die sich nach Betätigung der entsprechenden Hubeinrichtung 16 zum Öffnen des dritten Nachbehandlungswerkzeug ergibt.

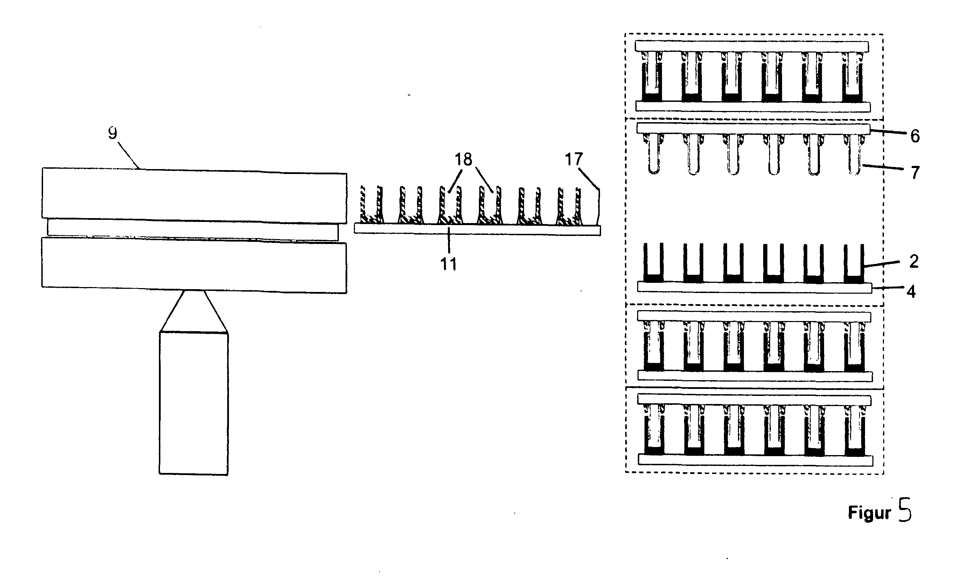

In den Figuren 5 bis 13 ist eine zweite Ausführungsform dargestellt. Auch hier ist wieder eine Ansicht von oben gezeigt, d.h. das Spritzgießwerkzeug ist ein Horizontalwerkzeug, bei dem sich das Werkzeug durch eine horizontale Relativbewegung der Werkzeugteile zueinander öffnet.

In Figur 5 ist wieder ein Block bestehend aus vier Nachbehandlungswerkzeugen jeweils mit Kavitätenplatte 4 und Stiftplatte 6. Das zweite Nachbehandlungswerkzeug II ist gerade geöffnet und die Vorformlinge 7 sind (gehalten beispielsweise mit Hilfe einer Vakuumeinrichtung) an den Stiften 3 der Stiftplatte 6 angeordnet.

Eine Greifereinrichtung 11, die hier eine Reihe von Übertragungskavitäten 18 sowie dazwischen angeordnete Führungsschienen aufweist, kann sowohl in die geöffnete Werkzeugform 9 als auch in ein geöffnetes Nachbehandlungswerkzeug bewegt werden.

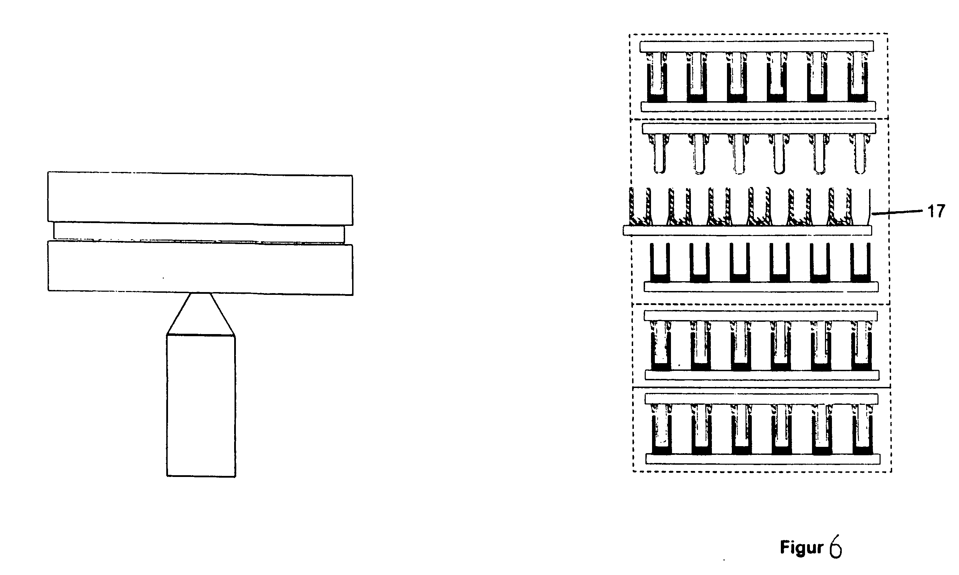

In Figur 6 ist eine Situation gezeigt, in der sich die Greifereinrichtung 11 innerhalb des geöffneten Nachbehandlungswerkzeug II befindet. Die Greifereinrichtung 11 ist derart angeordnet, daß die Führungsschienen 17 direkt gegenüber den zu entnehmenden Vorformlingen 7 angeordnet sind.

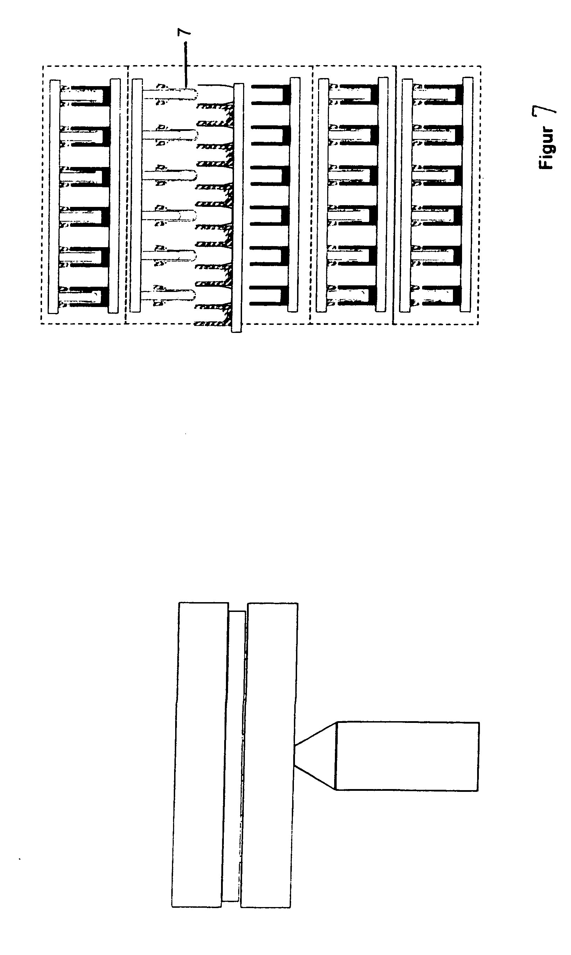

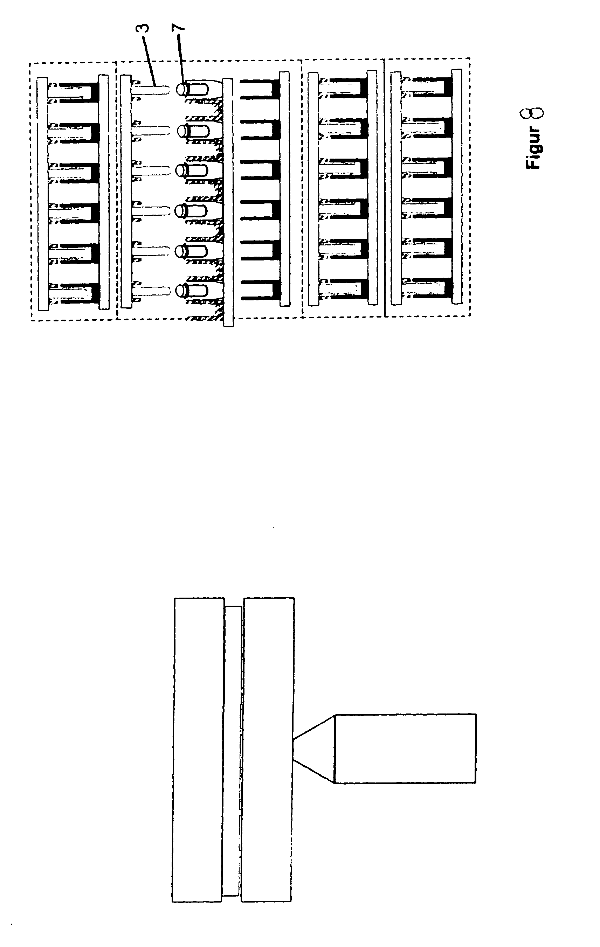

Die Preforms 7 können nun, wie in den Figuren 7 und 8 dargestellt ist, beispielsweise mit Hilfe von Druckluft von den Stiften abgestoßen werden und fallen die Führungsschienen 17 entlang. Gegebenenfalls kann die Führungsschiene noch mit Druckluft beaufschlagt werden, um eine zügige Entfernung der Preforms 7 aus den Führungsschienen 17 zu gewährleisten.

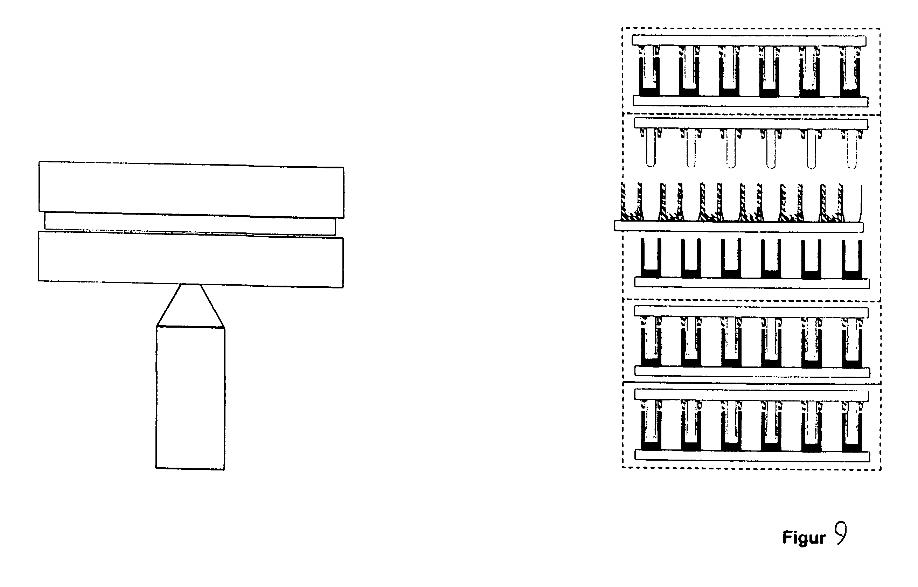

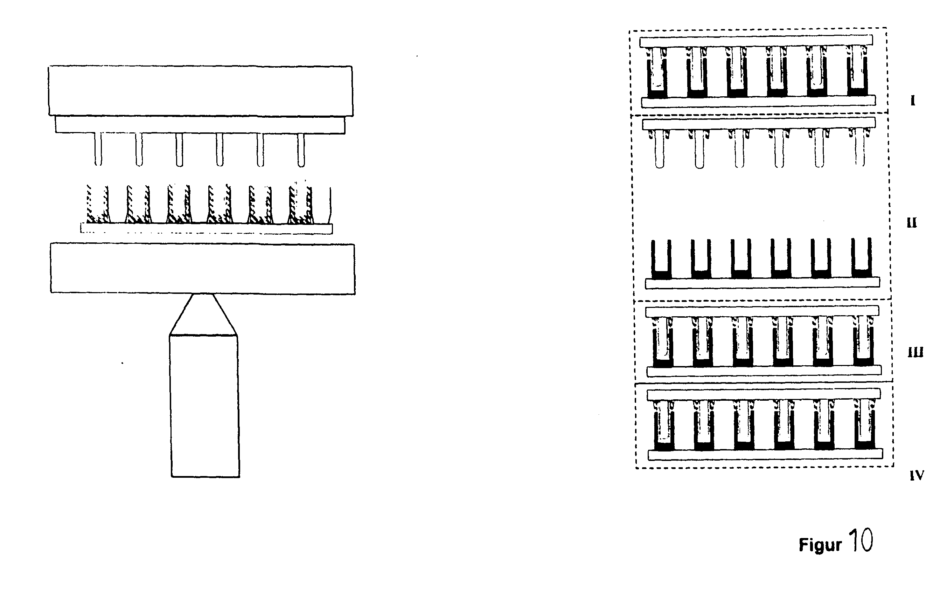

Die Greifereinheit 11 wird dann aus dem Nachbehandlungswerkzeug heraus- und in die geöffnete Werkzeugform 9 hineinbewegt, so daß eine neue Gruppe von Vorformlingen 7 in die Übertragungskavitäten 18 übernommen werden kann, wie in Figur 9 und 10 dargestellt.

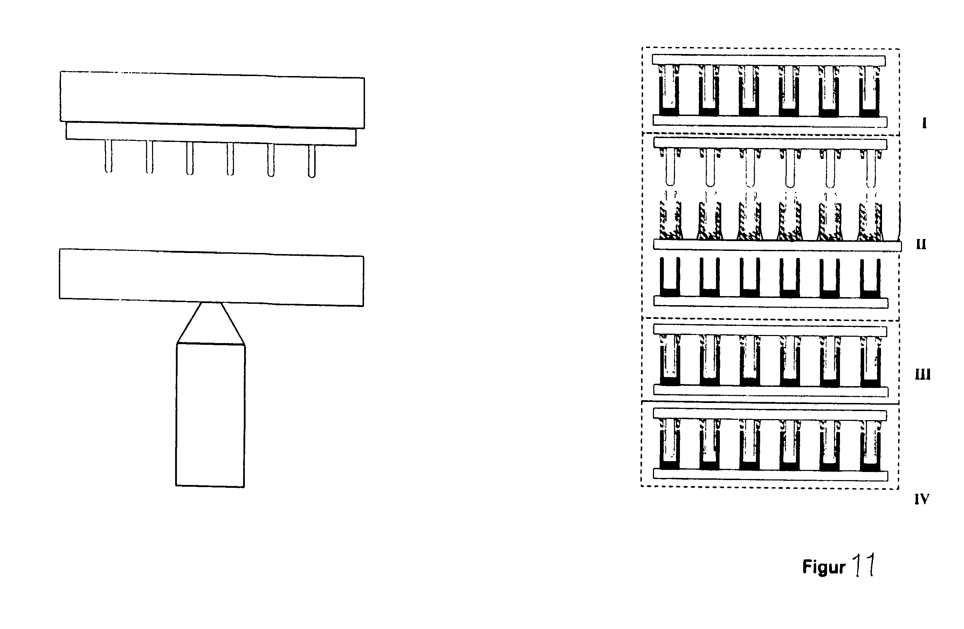

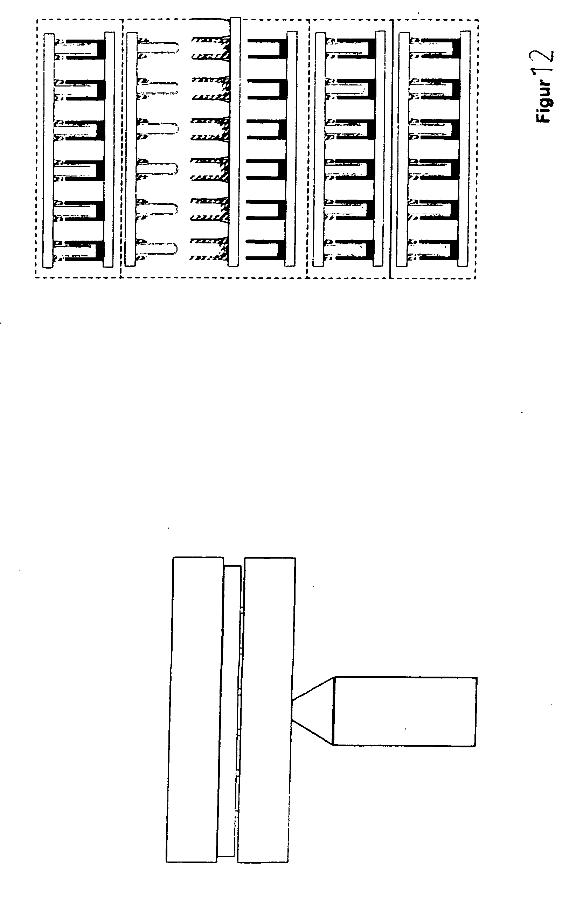

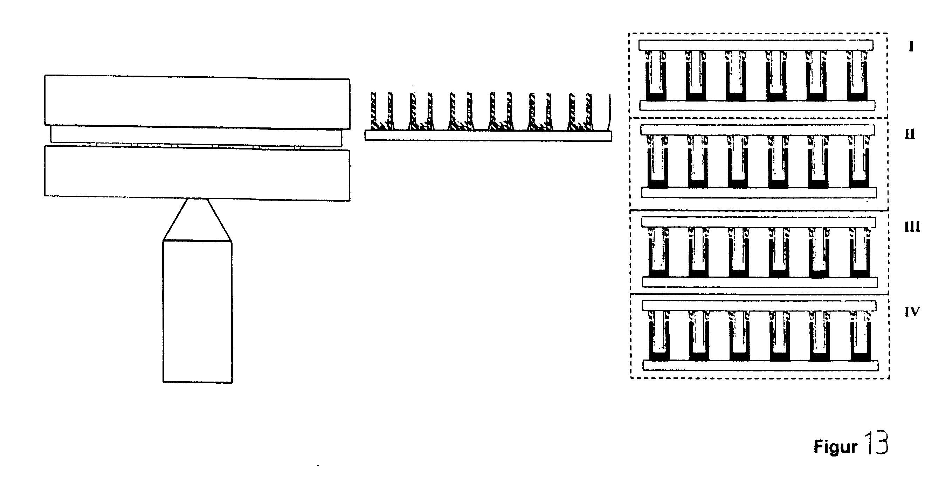

Die Greifereinheit 11 fährt dann wieder in das Nachbehandlungswerkzeug, wobei diesmal die Übertragungskavitäten 18 gegenüber den Stiften zu liegen kommen (Figur 11). Die Vorformlinge werden auf die Stifte übergeben (Figur 12) und die Greifereinheit 11 fährt aus dem Nachbehandlungswerkzeug, so daß sich das Werkzeug schließen kann und die Nachbehandlung im Nachbehandlungswerkzeug beginnen kann (Figur 13).

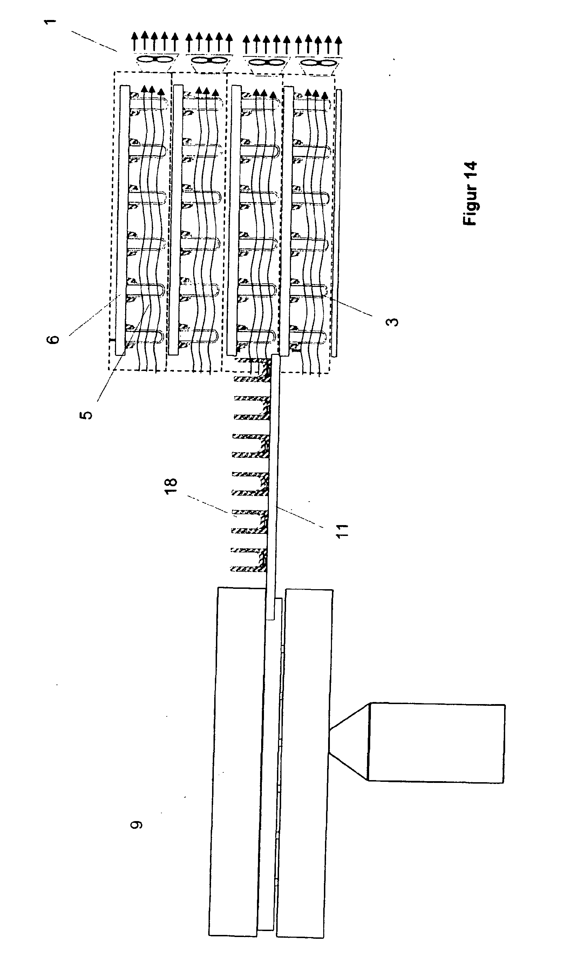

In den Figuren 14 bis 16 sind Ansichten von oben auf eine dritte Ausführungsform der Erfindung dargestellt. Diese Ausführungsform unterscheidet sich von den vorherigen im wesentlichen dadurch, daß das Aufnahmewerkzeug lediglich aus einer Stiftplatte 6 besteht. Auf die Aufnahmekavitäten konnte hier verzichtet werden. Die Kühlung der Außenseite der Preforms 7 erfolgt hier mittels Ventilatoren, die dafür sorgen, daß bei geschlossenem Werkzeug die Preforms 7 mit einem Luftstrom 5 beaufschlagt werden. Damit der Luftstrom 5 die Preforms wirkungsvoll kühlt, ist es notwendig, die Nachbehandlungswerkzeuge geschlossen zu halten. Im geschlossenen Zustand, der in Figur 14 für alle Nachbehandlungswerkzeuge gezeigt ist, befinden sich die Preforms 7 sozusagen zwischen zwei Platten, deren Abstand zueinander nur wenig größer als die Länge des Preforms ist, so daß der Luftstrom 5 gezwungen ist, an den Preforms vorbei zu strömen.

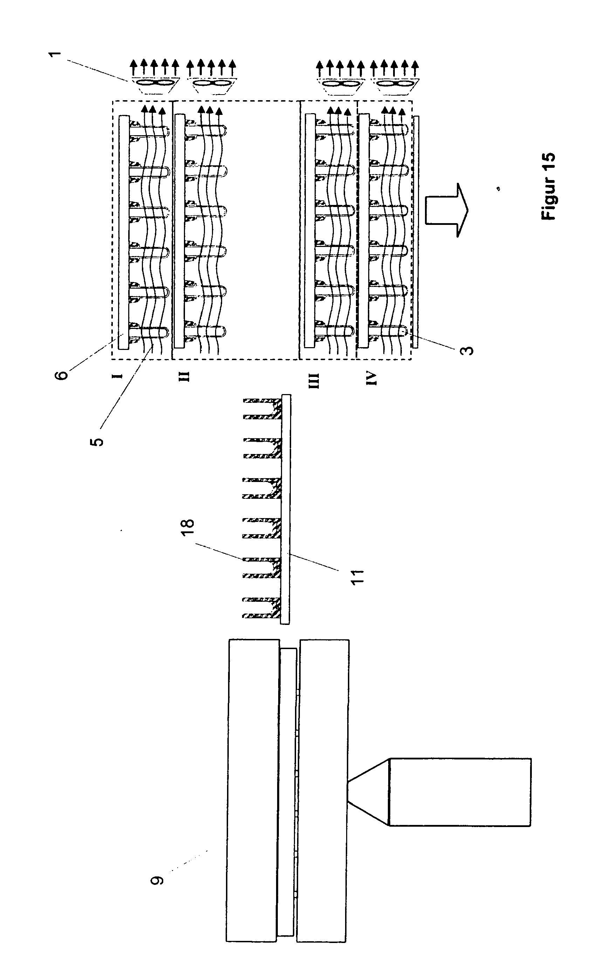

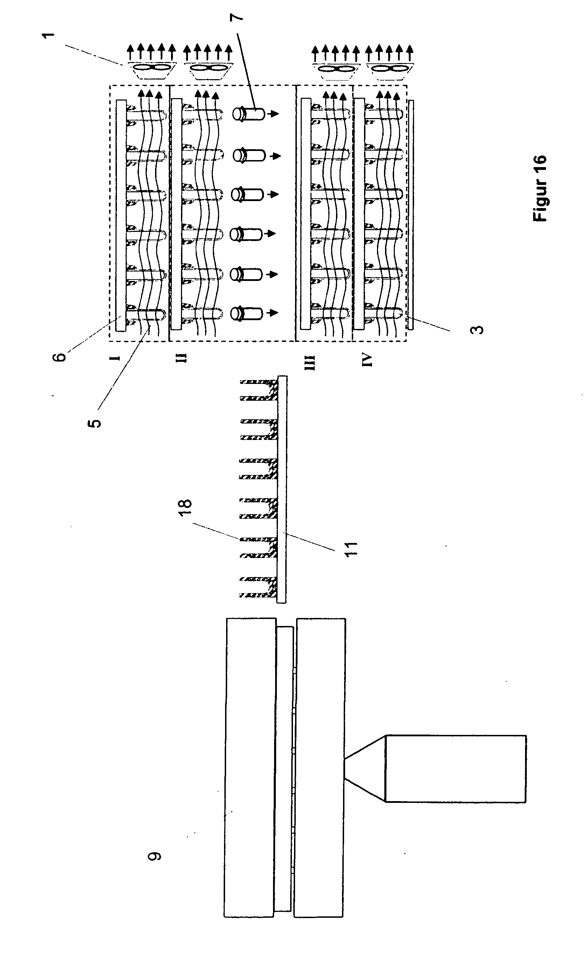

In dem in Figur 14 gezeigten Zustand sind alle Nachbehandlungswerkzeuge mit Vorformlingen 7 bestückt. Sobald die Nachbehandlung der Vorformlinge 7 in einem Nachbehandlungswerkzeug beendet ist, wird mit Hilfe der Öffnungs- und Schließvorrichtung das betreffende Nachbehandlungswerkzeug (in Figur 15 das Nachbehandlungswerkzeug mit der Bezeichnung II) geöffnet, so daß die Vorformlinge 7 ausgeworfen werden können (Figur 16).

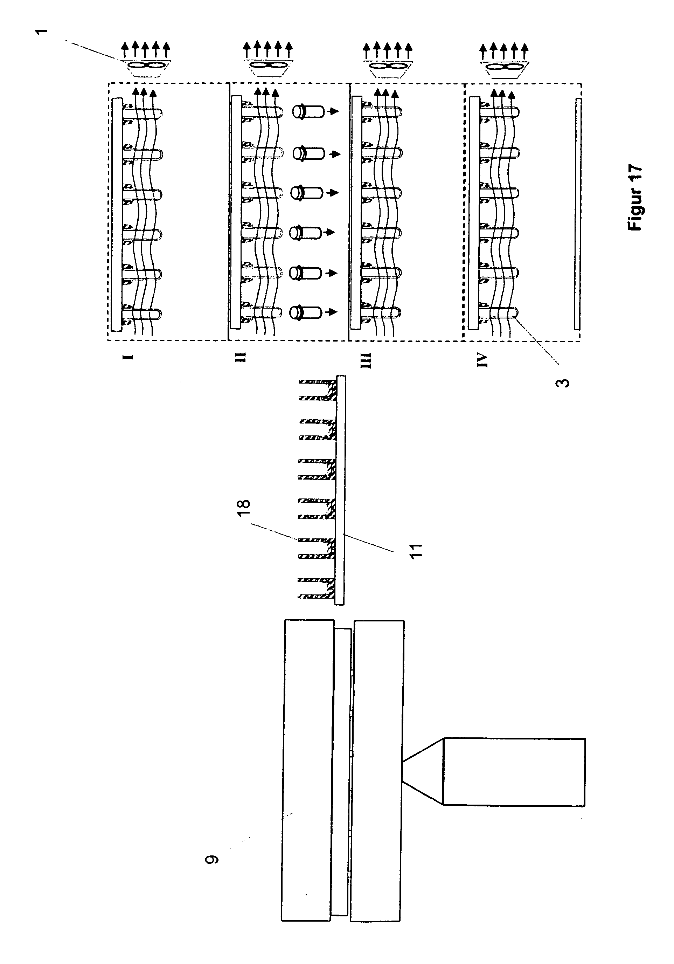

Es versteht sich, daß auch vollständig auf eine Öffnungs- und Schließvorrichtung verzichtet werden kann. Eine solche (vierte Ausführungsform) ist in Figur 17 dargestellt. Hier haben die einzelnen Stiftplatten 6 einen festen Abstand zueinander, der ein Auswerfen der Vorformlinge 7 aus den Nachbehandlungswerkzeugen erlaubt. Dadurch, daß die Ventilatoren 1 mit den Stiftplatten 6 verbunden sind, wird auch bei solch großen Abständen zwischen benachbarten Stiftplatten eine gewisse Kühlung der Außenseite der Vorformlinge 7 durch den Luftstrom 5 erzielt.

### Bezugszeichenliste:

| | |
|---|---|
| 1 | Ventilatoren |
| 2 | Aufnahmekavität |
| 3 | Nachbehandlungsstift |
| 4 | Aufnahmeplatte |
| 5 | Luftstrom |
| 6 | Stiftplatte |
| 7 | Vorformling |
| 9 | Werkzeugform |
| 11 | Greiferelemente |
| 13 | Verbindungseinheit |
| 14 | Schiene |
| 15 | Linearantrieb |
| 16 | Hubvorrichtung |
| 17 | Führungsschiene |
| 18 | Übertragungskavität |

## Patentansprüche

1. System zur Nachbehandlung von in einer Spritzgießform hergestellten Vorformlingen (7), mit mindestens zwei Nachbehandlungswerkzeugen, wobei jedes Nachbehandlungswerkzeug eine Aufnahmeplatte, die eine Gruppe von Aufnahmekavitäten aufweist, und eine Stiftplatte, die eine Gruppe von Nachbehandlungsstiften aufweist, hat, **dadurch gekennzeichnet, daß** eine Positioniervorrichtung zur Positionierung des ersten Nachbehandlungswerkzeuges in mindestens einer Positionierungsrichtung vorgesehen ist, wobei die mindestens zwei Nachbehandlungswerkzeuge miteinander verbunden sind, so daß mit der Positioniervorrichtung zur Positionierung des ersten Nachbehandlungswerkzeug zumindest ein weiteres Nachbehandlungswerkzeug durch entsprechendes Positionieren des ersten Nachbehandlungswerkzeugs positioniert werden kann.

2. System nach Anspruch 1, **dadurch gekennzeichnet, daß** jedes Nachbehandlungswerkzeug eine Öffnungs- und Schließvorrichtung zum Bewegen der Stiftplatte (6) und der Aufnahmeplatte (4) zwischen der offenen Position und der Nachbehandlungsposition aufweist.

3. System nach Anspruch 2, **dadurch gekennzeichnet, daß** die Positionierungsrichtung und die Öffnungs- und Schließrichtung kollinear zueinander ausgerichtet sind.

4. System nach einem der Ansprüche 1 bis 3, **dadurch gekennzeichnet, daß** die mindestens zwei Nachbehandlungswerkzeuge in Positionierrichtung nebeneinander angeordnet sind, wobei die Aufnahmeplatte eines Nachbehandlungswerkzeuges mit der Stiftplatte eines anderen Nachbehandlungswerkzeuges verbunden ist.

5. System nach einem der Ansprüche 1 bis 4, **dadurch gekennzeichnet, daß** die Positioniervorrichtung aus einem Linearantrieb vorzugsweise aus einem Servomotor besteht.

6. System nach einem der Ansprüche 1 bis 5, **dadurch gekennzeichnet, daß** die mindestens zwei Nachbehandlungswerkzeuge auf Schienen verschiebbar angeordnet sind.

7. System nach einem der Ansprüche 2 bis 6, **dadurch gekennzeichnet, daß** die Öffnungs-und Schließvorrichtung eine Hubeinrichtung ist.

8. System nach einem der Ansprüche 1 bis 7, **dadurch gekennzeichnet, daß** ein Führungselement zum Führen des Formlings aus dem Nachbehandlungswerkzeug, welches bei geöffnetem Nachbehandlungswerkzeug zwischen Aufnahmeplatte und Stiftplatte des Nachbehandlungswerkzeuges bewegt werden kann, vorgesehen ist.

9. System nach Anspruch 8, **dadurch gekennzeichnet, daß** das Führungselement eine im wesentlichen U-förmige Schiene ist.

10. System nach Anspruch 8 oder 9, **dadurch gekennzeichnet, daß** das Führungselement an der Einrichtung zum Überführen der Vorformlinge aus der Spritzgießform in die Nachbehandlungswerkzeuge vorgesehen ist.

11. System nach einem der Ansprüche 1 oder 3 bis 10, **dadurch gekennzeichnet, daß** nur eine Öffnungs- und Schließvorrichtung zum Bewegen der Stiftplatte (6) und der Aufnahmeplatte (4) zwischen der offenen Position und der Nachbehandlungsposition vorhanden ist.

12. System nach einem der Ansprüche 1 bis 11, **dadurch gekennzeichnet, daß** zumindest ein, vorzugsweise jedes Nachbehandlungswerkzeug eine Verriegelungsvorrichtung aufweist, welche in einer verriegelten Position ein Öffnen des entsprechenden Nachbehandlungswerkzeug verhindert.

13. System nach Anspruch 12, **dadurch gekennzeichnet, daß** die Nachbehandlungswerkzeuge in Positionierungsrichtung nebeneinander in Reihe angeordnet sind, die Positioniervorrichtung an dem ersten Nachbehandlungswerkzeug der Reihe angreift und die Öffnungs- und Schließvorrichtung an dem letzten Nachbehandlungswerkzeug der Reihe angreift, so daß durch Betätigen der Positioniervorrichtung die Reihe von Nachbehandlungswerkzeugen positioniert werden kann und durch Entriegeln der Verriegelungsvorrichtung für ein Nachbehandlungswerkzeug und Verriegeln der Verriegelungsvorrichtung für alle anderen Nachbehandlungswerkzeuge der Reihe sowie Betätigen der Öffnungs-und Schließvorrichtung jedes Nachbehandlungswerkzeug der Reihe positioniert sowie zwischen der offenen Position und der Nachbehandlungsposition bewegt werden kann.

## Claims

1. A system for the aftertreatment of parisons (7) produced in an injection molding mold, comprising at least two aftertreatment tools, wherein each aftertreatment tool comprises a receiving plate, which comprises a group of receiving cavities, and a pin plate, which comprises a group of aftertreatment pins, **characterized in that** there is provided a positioning device for positioning the first aftertreatment tool in at least one positioning direction, wherein the at least two aftertreatment tools are connected together so that with the positioning device for positioning the first aftertreatment tool at least one further aftertreatment can be positioned by suitable positioning of the first aftertreatment tool.

2. A system as set forth in claim 1 **characterized in that** each aftertreatment tool has an opening and closing device for moving the pin plate (6) and the receiving plate (4) between the open position and the aftertreatment position.

3. A system as set forth in claim 2 **characterized in that** the positioning device and the opening and closing device are arranged in mutually collinear orientation.

4. A system as set forth in one of claims 1 through 3 **characterized in that** the at least two aftertreatment tools are arranged in mutually juxtaposed relationship in the positioning direction, wherein the receiving plate of an aftertreatment tool is connected to the pin plate of another aftertreatment tool.

5. A system as set forth in one of claims 1 through 4 **characterized in that** the positioning device comprises a linear drive, preferably a servomotor.

6. A system as set forth in one of claims 1 through 5 **characterized in that** the at least two aftertreatment tools are arranged displaceably on rails.

7. A system as set forth in one of claims 2 through 6 **characterized in that** the opening and closing device is a stroke device.

8. A system as set forth in one of claims 1 through 7 **characterized in that** there is provided a guide element for guiding the molding out of the aftertreatment tool which when the aftertreatment tool is opened can be moved between the receiving plate and the pin plate of the aftertreatment too.

9. A system as set forth in claim 8 **characterized in that** the guide element is a substantially U-shaped rail.

10. A system as set forth in claim 8 or claim 9 **characterized in that** the guide element is provided at the device for transferring the parisons from the injection molding mold into the aftertreatment tools.

11. A system as set forth in one of claims 1 or 3 through 10 **characterized in that** there is only one opening and closing device for moving the pin plate (6) and the receiving plate (4) between the open position and the aftertreatment position.

12. A system as set forth in one of claims 1 through 11 **characterized in that** at least one and preferably each aftertreatment tool has a locking device which in a locked position prevents opening of the corresponding aftertreatment tool.

13. A system as set forth in claim 12 **characterized in that** the aftertreatment tools are arranged in mutually juxtaposed relationship in the positioning direction in a row, the positioning device engages the first aftertreatment tool in the row and the opening and closing device engages the last aftertreatment tool in the row so that the row of aftertreatment tools can be positioned by actuation of the positioning device and by unlocking of the locking device for an aftertreatment tool and locking of the locking device for all other aftertreatment tools in the row and actuation of the opening and closing devices of each aftertreatment tool in the row can be positioned as well as moved between the open position and the aftertreatment position.

## Revendications

1. Système destiné au post-traitement de préformes (7) produites dans un moule de moulage par injection, qui comprend au moins deux outils de post-traitement, chaque outil de post-traitement présentant une plaque de réception comportant un groupe de cavités de réception et une plaque à broches comportant un groupe de broches de post-traitement, **caractérisé en ce qu'**est prévu un dispositif de positionnement destiné à positionner le premier outil de post-traitement dans au moins une direction de positionnement, les outils de post-traitement, au moins au nombre de deux, étant reliés entre eux, de façon à permettre, au moyen du dispositif de positionnement destiné à positionner le premier outil de post-traitement, le positionnement d'au moins un autre outil de post-traitement par un positionnement correspondant du premier outil de post-traitement.

2. Système selon la revendication 1, **caractérisé en ce que** chaque outil de post-traitement comporte un dispositif d'ouverture et de fermeture destiné à déplacer la plaque à broches (6) et la plaque de réception (4) entre la position ouverte et la position de post-traitement.

3. Système selon la revendication 2, **caractérisé en ce que** la direction de positionnement et la direction d'ouverture et de fermeture sont alignées de manière colinéaire entre elles.

4. Système selon l'une des revendications 1 à 3, **caractérisé en ce que** les outils de post-traitement, au moins au nombre de deux, sont disposés côte à côte dans la direction de positionnement, la plaque de réception d'un outil de post-traitement étant reliée à la plaque à broches d'un autre outil de post-traitement.

5. Système selon l'une des revendications 1 à 4, **caractérisé en ce que** le dispositif de positionnement est constitué d'un entraînement linéaire, de préférence d'un servomoteur.

6. Système selon l'une des revendications 1 à 5, **caractérisé en ce que** les outils de post-traitement, au moins au nombre de deux, sont montés coulissants sur des rails.

7. Système selon l'une des revendications 2 à 6, **caractérisé en ce que** le dispositif d'ouverture et de fermeture est un dispositif de levage.

8. Système selon l'une des revendications 1 à 7, **caractérisé en ce qu'**est prévu un élément de guidage destiné à guider la préforme à la sortie de l'outil de post-traitement, élément de guidage qui, en position ouverte de l'outil de post-traitement, peut être déplacé entre la plaque de réception et la plaque à broches de l'outil de post-traitement.

9. Système selon la revendication 8, **caractérisé en ce que** l'élément de guidage est un rail sensiblement en forme de U.

10. Système selon la revendication 8 ou 9, **caractérisé en ce que** l'élément de guidage est prévu sur le dispositif destiné à transférer les préformes du moule de moulage par injection dans les outils de post-traitement.

11. Système selon l'une des revendications 1 ou 3 à 10, **caractérisé en ce qu'**un seul dispositif d'ouverture et de fermeture est prévu pour déplacer la plaque à broches (6) et la plaque de réception (4) entre la position ouverte et la position de post-traitement.

12. Système selon l'une des revendications 1 à 11, **caractérisé en ce qu'**au moins un, de préférence chaque outil de post-traitement, comporte un dispositif de verrouillage qui, dans une position verrouillée, empêche une ouverture de l'outil de post-traitement correspondant.

13. Système selon la revendication 12, **caractérisé en ce que** les outils de post-traitement sont disposés côte à côte en une rangée dans la direction de positionnement, le dispositif de positionnement agit sur le premier outil de post-traitement de la rangée et le dispositif d'ouverture et de fermeture agit sur le dernier outil de post-traitement de la rangée de telle sorte que l'actionnement du dispositif de positionnement permet le positionnement de la rangée d'outils de post-traitement, et le déverrouillage du dispositif de verrouillage d'un outil de post-traitement et le verrouillage du dispositif de verrouillage de tous les autres outils de post-traitement de la rangée ainsi que l'actionnement du dispositif d'ouverture et de fermeture permettent le positionnement de chaque outil de post-traitement de la rangée et son déplacement entre la position ouverte et la position de post-traitement.
